(19) **Europäisches Patentamt / European Patent Office / Office européen des brevets**

(11) **EP 3 901 711 B1**

(12) **EUROPEAN PATENT SPECIFICATION**

(45) Date of publication and mention
of the grant of the patent:
**06.04.2022   Bulletin 2022/14**

(21) Application number: **20170922.7**

(22) Date of filing: **22.04.2020**

(51) International Patent Classification (IPC):
**G05B 15/02** *(2006.01)*

(52) Cooperative Patent Classification (CPC):
**G05B 15/02;** G05B 2219/2614; G05B 2219/2642

(54) **REMOTE MAINTENANCE**

FERNWARTUNG

MAINTENANCE À DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.10.2021   Bulletin 2021/43**

(73) Proprietor: **Siemens Schweiz AG
8047 Zürich (CH)**

(72) Inventor: **Vogt, Andreas
6005 Luzern (CH)**

(74) Representative: **Maier, Daniel Oliver
Siemens AG
T IP TLI
Otto-Hahn-Ring 6
81739 München (DE)**

(56) References cited:
**EP-A1- 2 792 958          WO-A1-2019/204779
US-A1- 2014 266 755     US-A1- 2017 292 725
US-A1- 2017 366 414     US-A1- 2019 195 525
US-A1- 2019 271 978**

**Description**

Background

The present disclosure relates to a system having a room controller such as a thermostat and/or a smart thermostat. More specifically, the present disclosure focuses on a room controller that communicates with a remote server such as a remote maintenance server.

Room controllers and thermostats that communicate with a remote controller are known. For example, thermostats can communicate with a remote controller such as a cloud service via the internet. To that end, the thermostat can rely on a predetermined communication bus protocol.

A remote controller can directly or indirectly provide maintenance services to a room controller. A remote server can, by way of example allow maintenance personnel to access a status of a thermostat. In the event of errors, defects or malfunctioning equipment, maintenance personnel can provide and/or suggest solutions to resolve such issues.

Room controllers such as thermostats can control an appliance in a system for heating, ventilation and/or air-conditioning (HVAC). The appliance can also comprise a heating device such as a domestic heating device and/or an underfloor heating device of a domestic heating system. The heating device can supply a heating medium to a heat exchanger, and/or to a radiator of the domestic heating system. The heating device can also supply domestic hot water. Domestic heating devices are frequently part of central heating systems of buildings. The heating medium is then supplied to a heat exchanger, to a wall-mounted panel, and/or to a radiator for the purpose of heating the building.

Thermostats that function to communicate with a remote controller allow remote access an appliance by maintenance personnel. For example, maintenance personnel can remotely monitor a condition of a heating, ventilation, and/or air-conditioning system. Remote access can alleviate maintenance work and repair work to be carried out by on-site maintenance personnel.

A patent application US2005/125102A1 was filed on 7 December 2004. The application was published on 9 June 2005. US2005/125102A1 deals with a HVAC/R monitoring apparatus and method.

US2005/125102A1 discloses one or more thermostats 60 arranged inside a building. The thermostats 60 enable control of a heating, ventilation, air-conditioning and/or refrigeration HVAC/R system 14. A thermostat 60 connects to a second computer 18 via a first computer 12 of a monitoring apparatus 10. The second computer 18 can be at a location remote from the first computer 12. The second computer 18 can also store operating data of the HVAC/R system 14 transferred via the first computer.

The first computer 12 of the monitoring apparatus 10 monitors various components of the HVAC/R system 14 such as one of the thermostats 60 and/or temperature sensors 62, 64. In so doing, the first computer 12 evaluates differences in temperatures senses by the sensors 62. The first computer 12 then determines whether a change in temperature exceeds a specified range. If the temperature difference is outside the specified range, an error signal will be produced. The error signal can be transmitted to the second computer 18 via a modem 90.

The second computer 18 can upon receipt of the signal request a peripheral device 19 to notify a service technician. The second computer 18 can also send instructions back to the first computer 12 of the monitoring apparatus 10.

A European patent application EP2792958A1 was filed by ROBERT BOSCH GMBH on 10 April 2014. The application was published on 22 October 2014 and claims a priority of 18 April 2013. EP2792958A1 deals with remote maintenance.

EP2792958A1 teaches a thermostat 3. The thermostat 3 is in operative communication with a remote maintenance server 2. The thermostat 3 can request appliance data 50 from an appliance 6. The appliance data 50 can be stored and can be compared to reference data 55. The thermostat 3 is operable to predict an error of an appliance based on the comparison between the stored data and the reference data 55.

A patent application WO2019/204779A1 was filed by EMERSON CLIMATE TECHNOLOGIES, US on 19 April 2019. The application was published on 24 October 2019. WO2019/204779A1 deals with indoor air quality and occupant monitoring systems and methods.

A patent application US2017/366414A1 was filed by JOHNSON CONTROLS TECH CO, US on 21 June 2016. The application was published on 21 December 2017. US2017/366414A1 teaches a building management system with predictive diagnostics.

A patent application US2019/195525A1 was filed by AT & T IP I LP, US on 21 December 2017. The application was published on 27 June 2019. US2019/195525A1 deals with a method and with an apparatus for operating heating and cooling equipment via a network. A patent application US2017/292725A1 was filed by EMERSON ELECTRIC CO, US on 10 April 2017. The application was published on 12 October 2017. US2017/292725A1 deals with systems and methods for mobile application for HVAC installation and diagnostics.

A patent application US2014/266755A1 was filed by EMERSON ELECTRIC CO, US on 14 March 2014. The application was published on 18 September 2014. US2014/266755A1 teaches HVAC system remote monitoring and diagnosis.

A patent application US2019/271978A1 was filed by JOHNSON CONTROLS TECH CO, US on 21 May 2019. The application was published on 5 September 2019. US2019/271978A1 deals with a model predictive maintenance system with automatic service work order generation.

The disclosure aims to provide an improved thermostat and an improved system, wherein the thermostat communicates with a remote controller.

Summary

The invention is defined by the system of claim 1. Optional aspects of the invention are defined by the dependent claims.

Brief description of the drawings

Various features will become apparent to those skilled in the art from the following detailed description of the disclosed non-limiting embodiments. The drawings that accompany the detailed description can be briefly described as follows:

FIG 1 schematically illustrates a heating, ventilation, air-conditioning system having a plurality of appliances.
FIG 2 depicts a remote controller such as a remote maintenance server.
FIG 3 shows a room controller such as a thermostat in detail.
FIG 4 illustrates mobile handheld device in communication with the heating, ventilation, air-conditioning system.
FIG 5 illustrates a wireless connection between a room controller and a mobile handheld device.
FIG 6 shows a plot of relative signal strengths versus time.

Detailed description

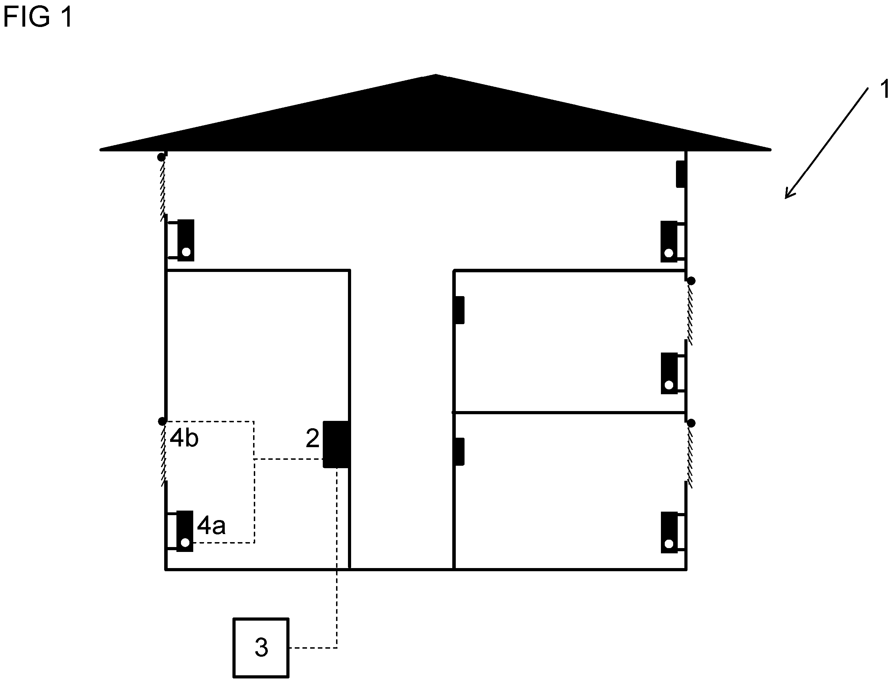

FIG 1 shows a system (1) having a room controller (2) and a remote controller (3). The room controller (2) is preferably installed inside a building such as a residential, commercial, and/or industrial building. The system (1) can be a heating, ventilation, and/or air-conditioning system that supplies the building with heating, fresh air, etc.

The remote controller (3) is typically located remotely from the building. The remote controller (3) can, by way of non-limiting example, be a cloud computer and/or a cloud service. It is even envisaged that the remote controller (3) is located thousands of kilometers from the building.

One or more appliances (4a, 4b) are arranged inside the building. The one or more appliances (4a, 4b) are typically selected from at least one of:

- a heater,
- a refrigeration apparatus,
- a fluid conveyor such as a fan and/or a variable speed fan,
- a damper,
- window blinds,

- a burner such as a gas-fired burner or an oil-fired burner,
- a compressor of a refrigeration apparatus,
- an expansion valve of a refrigeration apparatus, especially an electronic expansion valve,
- a valve such as a valve of a heater,
- an electronic pressure independent control valve,
- an air quality sensor,
- an apparatus comprising temperature sensors, humidity sensors, speed sensors, pressure sensor, etc.

The above list is not exhaustive.
The appliance (4a, 4b) sends appliance data such as

- revolutions per minute of a compressor,
- revolutions per minute of a fan,
- temperatures inside an actuator,
- opening positions of a valve and/or of a damper,
- data from flame sensors inside burner appliances,
- positions of window blinds, etc

to a room controller (2). The room controller (2) can then either itself try and diagnose a condition of the appliance or forward the data to the remote controller (3). In the event of the room controller (2) carrying out the diagnosis, the room controller (2) has access to reference data. The room controller (2) then compares data from the appliance (4a, 4b) to the reference data to obtain a result. In the event of the remote controller (3) analysing the data, the remote controller (3) also has access reference data to diagnose a condition of the appliance (4a, 4b). It can be advantageous to forward the data to the remote controller (3), since more reference data and/or better reference data are typically available at the remote controller (3).

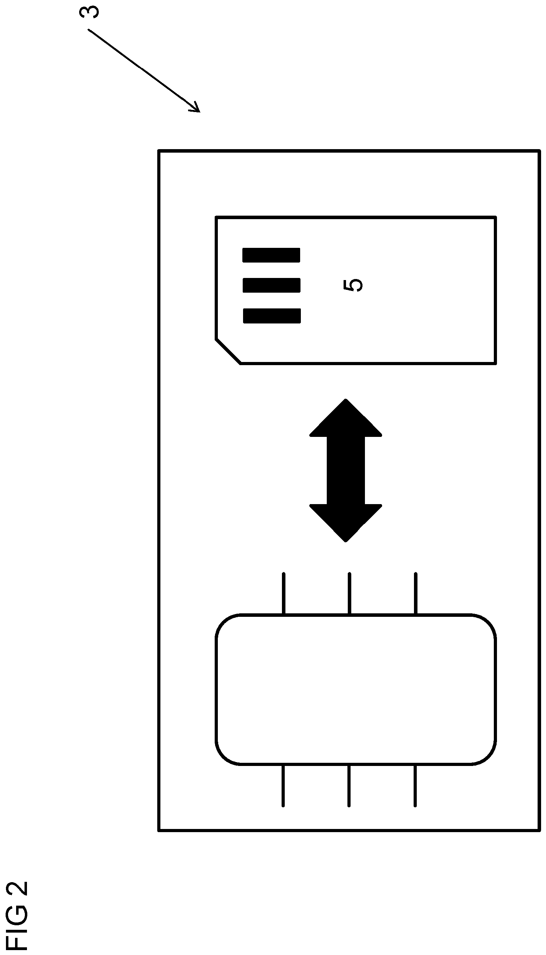

FIG 2 shows a remote controller (3) having a processor and a memory (5). The memory (5) of the remote controller (3) stores the reference data to be used in the diagnosis and/or in the condition monitoring. Reference data can be available at the remote controller (3) for individual appliances (4a, 4b).

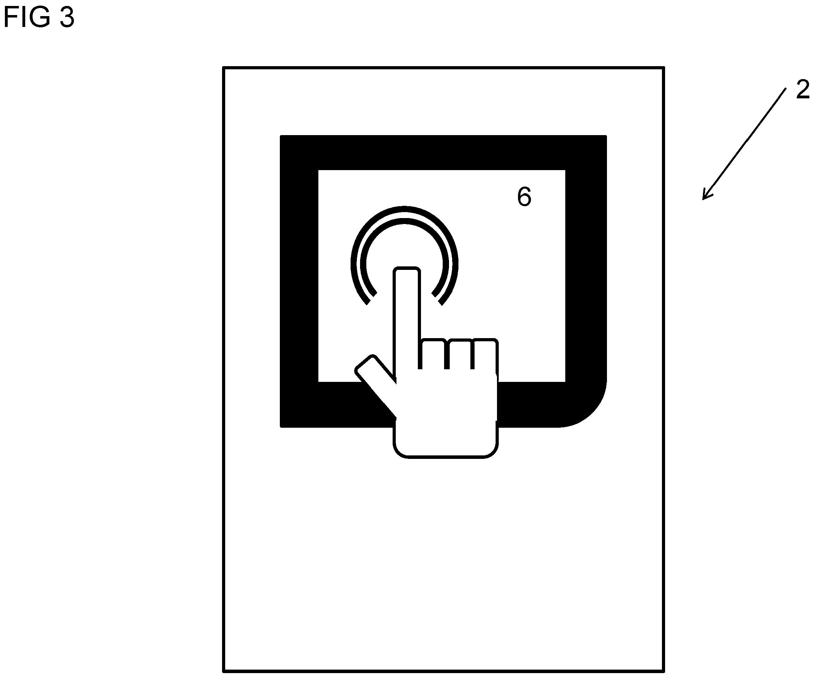

Now turning to FIG 3, a room controller (2) having a user interface (6) and/or a local maintenance interface (6) is illustrated. The user interface (6) and/or the local maintenance interface (6) functions to inform a user and/or maintenance personnel of an appliance failure. The user interface (6) and/or the local maintenance interface (6) can also enable input from a user and/or from maintenance personnel. In an embodiment, input from a user and/or from maintenance personnel is indicative of reference data.

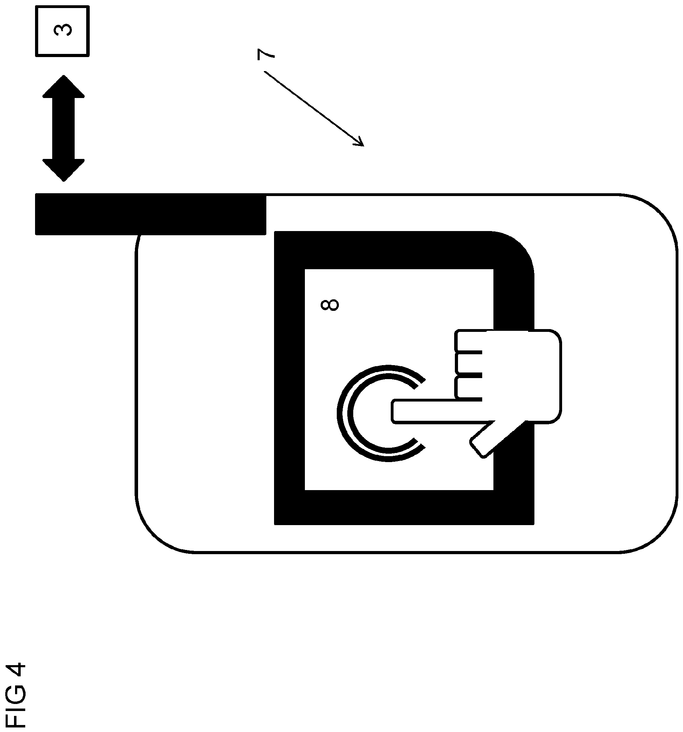

The system (1) can also communicate with a mobile handheld device (7) as shown in FIG 4. The system (1) thereby informs users and/or maintenance personnel. To that end, mobile handheld device (7) provides a wireless receiver and/or a wireless transmitter. The mobile handheld device (7) also has a screen (8) such as a touch screen to alert a user.

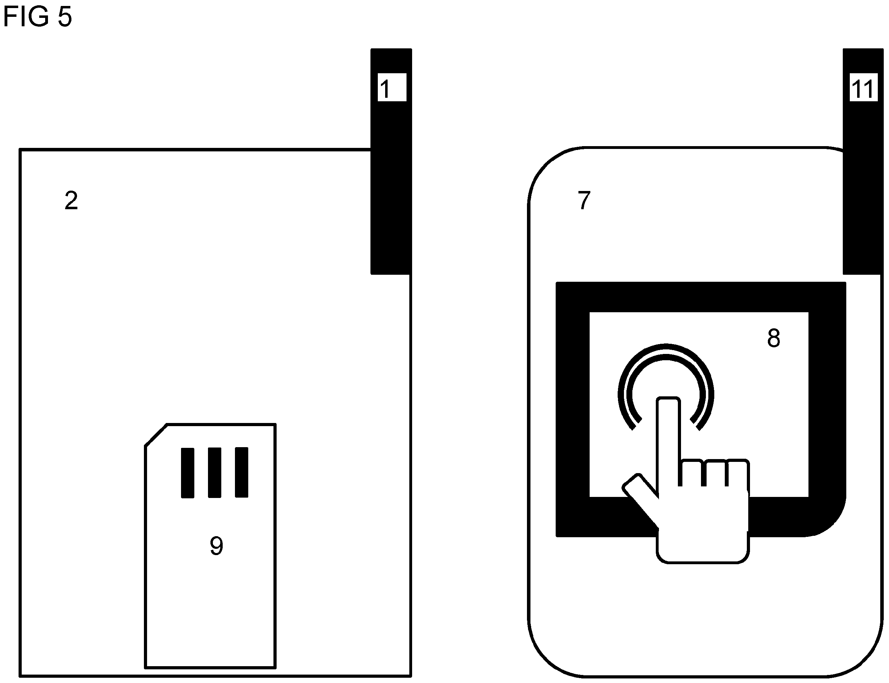

Now referring to FIG 5, two wireless interfaces and/or transceivers (10, 11) are shown. The wireless transceivers (10, 11) enable communication between the room controller (2) and the mobile handheld device (7). The wireless interfaces (10, 11) also afford proximity detection based on relative signal strengths.

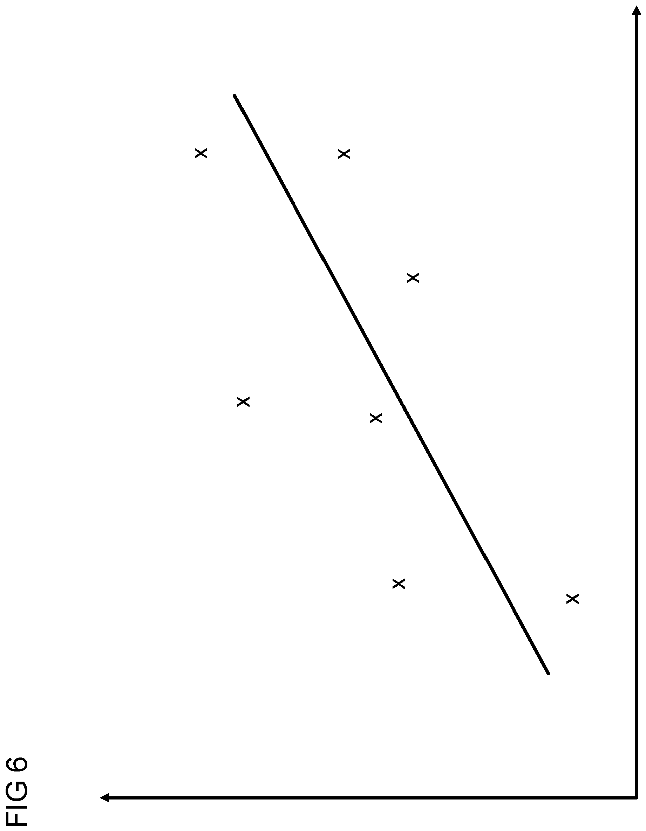

FIG 6 illustrates an increase in signal strength over time. Several crosses in the graph show relative signal strengths of beacons received by the room controller (2). A linear regression analysis can be performed as illustrated in FIG 6 to establish an increase in relative signal strength over time.

As described in detail herein, the instant disclosure teaches a system (1) comprising:

a room controller (2), a remote controller (3) having a memory (5) storing reference data, at least one appliance (4a, 4b), the room controller (2) being in operative communication with the at least one appliance (4a, 4b) and with the remote controller (3), the remote controller (3) being located remotely from the room controller (2); wherein the room controller (2) is configured to:

> produce a request for appliance data;
> transmit the request to the at least one appliance (4a, 4b);

wherein the at least one appliance (4a, 4b) is configured to:

> receive the request;
> in response to the request, produce the appliance data and transmit the appliance data to the room controller (2);

wherein the room controller (2) is configured to:

> receive the appliance data from the at least one appliance (4a, 4b);
> transmit the appliance data to the remote controller (3);

wherein the remote controller (3) is configured to:

> receive the appliance data from the room controller (2);
> store the appliance data over time in the memory (5) of the remote controller (3);
> read the reference data from the memory (5) of the remote controller (3);
> compare the stored appliance data to the reference data; and
> predict an appliance error based on the comparison between the stored appliance data and the reference data.

The present disclosure also teaches a system (1) comprising:

a room controller (2), a remote controller (3) having a memory (5) storing reference data, at least one appliance (4a, 4b), the room controller (2) being in operative communication with the at least one appliance (4a, 4b) and with the remote controller (3), the remote controller (3) being located remotely from the room controller (2); wherein the room controller (2) is configured to:

> produce a request signal for appliance data;
> transmit the request signal to the at least one appliance (4a, 4b);

wherein the at least one appliance (4a, 4b) is configured to:

> receive the request signal;
> in response to the request signal, produce the appliance data and produce an appliance signal from the appliance data and transmit the appliance signal to the room controller (2);

wherein the room controller (2) is configured to:

> receive the appliance signal from the at least one appliance (4a, 4b);
> transmit the appliance signal to the remote controller (3);

wherein the remote controller (3) is configured to:

> receive the appliance signal from the room controller (2);
> produce the appliance data from the appliance signal received from the room controller (2);
> store the appliance data over time in the memory (5) of the remote controller (3);
> read the reference data from the memory (5) of the remote controller (3);
> compare the stored appliance data to the reference data; and
> predict an appliance error based on the comparison between the stored appliance data and the reference data.

The present disclosure also teaches a system (1) comprising:

a room controller (2), a remote controller (3) having a memory (5) storing reference data, at least one appliance (4a, 4b), the room controller (2) being in operative communication with the at least one appliance (4a, 4b) and with the remote controller (3), the remote controller (3) being located remotely from the room controller (2); wherein the room controller (2) is configured to:

> produce a request signal for appliance data;
> transmit the request signal to the at least one appliance (4a, 4b);

wherein the at least one appliance (4a, 4b) is configured to:

> receive the request signal;
> in response to the request signal, produce the appliance data and produce an appliance signal from the appliance data and transmit the appliance signal to the room controller (2);

wherein the room controller (2) has a memory (9) and is configured to:

> receive the appliance signal from the at least one appliance (4a, 4b);
> produce the appliance data from the appliance signal received from the at least one appliance (4a, 4b);
> search for reference data in the memory (9) of the room controller (2);
> if reference data are found in the memory (9) of the room controller (2):
>
> > read the reference data from the memory (9) of the room controller (2);
> > store the appliance data over time in the memory (9) of the room controller (2);
> > compare the appliance data stored in the memory (9) of the room controller (2) to the reference data read from the memory (9) of the room controller (2);
> > predict an appliance error based on the comparison between the appliance data stored in the memory (9) of the room controller (2) and the reference data read from the memory (9) of the room controller (2);
>
> if reference data are only or are exclusively stored in the memory (5) of the remote controller (3), transmit the appliance signal to the remote controller (3), the remote controller (3) being configured to:
>
> > receive the appliance signal from the room controller (2);
> > produce the appliance data from the appliance signal received from the room controller (2);
> > store the appliance data over time in the memory (5) of the remote controller (3);
> > read the reference data from the memory (5) of the remote controller (3);
> > compare the appliance data stored in the memory (5) of the remote controller (3) to the reference data read from the memory (5) of the remote controller (3); and
> > predict an appliance error based on the comparison between the appliance data stored in the memory (5) of the remote controller (3) and the reference data read from the memory (5) of the remote controller (3).

It is envisaged that the system (1) is a system for heating, ventilation, and/or air-conditioning. It is also envisaged that the system (1) is a system for heating, ventilation, air-conditioning and/or refrigeration.

It is envisaged that the room controller (2) is or comprises a thermostat such as a smart thermostat.

The memory (5) of the remote controller (3) preferably is a non-volatile memory. The memory (5) of the remote controller (3) advantageously is a non-transitory memory. The memory (5) of the remote controller (3) ideally connects to the remote controller (3) and is in operative communication with the remote controller (3). In an embodiment, the remote controller (3) comprises a microcontroller and/or a microprocessor, the microcontroller and/or the microprocessor of the remote controller (3) being in operative communication with the memory (5) of the remote controller (3).

The remote controller (3) ideally comprises a remote maintenance server.

It is envisaged that the remote controller (3) is located at least one thousand meters, preferably at least two thousand meters, more preferably at least five thousand meters, from the room controller (2). The remote controller (3) is preferably located remotely from the at least one appliance (4a, 4b). It is envisaged that the remote controller (3) is located at least one thousand meters, preferably at least two thousand meters, more preferably at least five thousand meters, from the at least one appliance (4a, 4b). The room controller (2) is advantageously located remotely from the at least one appliance (4a, 4b). It is envisaged that the room controller (2) is located at least two meters, preferably at least five meters, more preferably at least ten meters, from the at least one appliance (4a, 4b).

It is envisaged that the at least one appliance (4a, 4b) is or comprises at least one appliance of a system for heating, ventilation, and/or air-conditioning. It is also envisaged that the at least one appliance (4a, 4b) is or comprises at least one appliance of a system for heating, ventilation, air-conditioning, and/or refrigeration. It is still envisaged that the at least one appliance (4a, 4b) is or comprises at least one sensor of a system for heating, ventilation, and/or air-conditioning. It is also envisaged that the at least one appliance (4a, 4b) is or comprises at least one sensor of a system for heating, ventilation, air-conditioning, and/or refrigeration. It is further envisaged that the at least one appliance (4a, 4b) is or comprises at least one actuator of a system for heating, ventilation, and/or air-conditioning. It is also envisaged that the at least one appliance (4a, 4b) is or comprises at least one actuator of a system for heating, ventilation, air-conditioning, and/or refrigeration.

The room controller (2) is preferably operable to transmit the request and/or the request signal to the at least one appliance (4a, 4b) using a predetermined communication bus protocol and using a digital communication bus. The room controller (2) is advantageously operable to transmit the appliance data and/or the appliance signal to the remote controller (3) using a predetermined communication bus protocol and using a digital communication bus. It is envisaged that the system (1) comprises the digital communication bus.

In an embodiment, the room controller (2) is configured for receiving and transmitting network data from and to the remote controller (3). According to a related aspect of the present disclosure, the remote controller (3) is configured for receiving and transmitting network data from and to the room controller (2).

In an embodiment, the room controller (2) is configured for receiving and transmitting remote controller data from and to the remote controller (3). According to a related aspect of the present disclosure, the remote controller (3) is configured for receiving and transmitting remote controller data from and to the room controller (2).

In an embodiment, the room controller (2) is configured for receiving and transmitting room controller data from and to the remote controller (3). According to a related aspect of the present disclosure, the remote controller (3) is configured for receiving and transmitting room controller data from and to the room controller (2).

In an embodiment, the room controller (2) is configured for receiving and transmitting appliance data from and to the at least one appliance (4a, 4b). According to a related aspect of the present disclosure, the at least one appliance (4a, 4b) is configured for receiving and transmitting appliance data from and to the room controller (2).

The room controller (2) preferably comprises a microcontroller and/or a microprocessor and/or an electronic control unit. The remote controller (3) advantageously comprises a microcontroller and/or a microprocessor and/or an electronic control unit. The at least one appliance (4a, 4b) commonly comprises a microcontroller and/or a microprocessor and/or an electronic control unit.

The instant disclosure also teaches any of the systems (1) described above, wherein the remote controller (3) is configured to:

> compare the stored appliance data to the reference data and/or to model data produced from a reference model; and
> predict a maintenance request for the at least one appliance (4a, 4b) based on the comparison between the stored appliance data and the reference data and/or the model data.

In an embodiment, the remote controller (3) is configured to:
predict a preventive maintenance request for the at least one appliance (4a, 4b) based on the comparison between the stored appliance data and the reference data and/or the model data.

It is also envisaged that the memory (5) of the remote controller (3) stores a reference model, the remote controller (3) being configured to:

read the reference model from the memory (5) of the remote controller (3);
employ the reference model to produce and/or to compute model data; and
predict a maintenance request for the at least one appliance (4a, 4b) and/or predict a preventive maintenance request for the at least one appliance (4a, 4b) based on the comparison between the stored appliance data and the model data.

According to an aspect of the present disclosure, the reference model comprises a reference model for the at least one appliance (4a, 4b). The reference model can also comprise a reference model of the at least one appliance (4a, 4b). The reference model can still comprise a reference model applicable to the at least one appliance (4a, 4b).

According to an aspect of the present disclosure, the model data comprise model data for the at least one appliance (4a, 4b). The model data can also comprise model data of the at least one appliance (4a, 4b). The model data can still comprise model data applicable to the at least one appliance (4a, 4b).

The instant disclosure still teaches any of the systems (1) described above, wherein the remote controller (3) is configured to:

> compare the stored appliance data to the reference data and/or to model data produced from a reference model; and
> produce an energy savings signal based on the comparison between the stored appliance data and the reference data and/or the model data.
> transmit the energy savings signal to the room controller (2);

wherein the room controller (2) has a user interface (6) and is configured to:

> receive the energy savings signal;
> in response to the energy savings signal, produce an energy savings message indicating suggested energy savings from the energy savings signal; and
> employ the user interface (6) to display the energy savings message.

It is also envisaged that the memory (5) of the remote controller (3) stores a reference model, the remote controller (3) being configured to:

> read the reference model from the memory (5) of the remote controller (3);
> employ the reference model to produce and/or to compute model data; and
> produce an energy savings signal based on the comparison between the stored appliance data and the model data;
> transmit the energy savings signal to the room controller (2);

wherein the room controller (2) has a user interface (6) and is configured to:

receive the energy savings signal;
in response to the energy savings signal, produce an energy savings message indicating suggested energy savings from the energy savings signal; and employ the user interface (6) to display the energy savings message.

According to an aspect, the suggested energy savings comprise indications of one or more windows left open. In a special embodiment, the suggested energy savings comprise indications of one or more hopper windows left open. The one or more windows and/or the one or more hopper windows can have been unintentionally left open.

It is envisaged that the room controller (2) is configured to:
employ the user interface (6) to display the energy savings message to a user and/or to maintenance personnel.

The instant disclosure also teaches any of the systems (1) described above, wherein the remote controller (3) is configured to:

produce an appliance error signal based on the predicted appliance error;
transmit the appliance error signal to the room controller (2);

wherein the room controller (2) has a user interface (6) and is configured to:

receive the appliance error signal; and
in response to the appliance error signal, produce an alert message from the appliance error signal and employ the user interface (6) to display the alert message.

The instant disclosure also teaches any of the systems (1) described herein,
wherein the remote controller (3) is configured to:

produce an appliance error signal based on the predicted appliance error;
transmit the appliance error signal to the room controller (2);

wherein the room controller (2) has a user interface (6) and is configured to:

receive the appliance error signal; and
in response to the appliance error signal, produce an alert message from the appliance error signal and employ the user interface (6) to display the alert message to a user and/or to maintenance personnel.

It is envisaged that the user interface (6) comprises at least one of:

- a display such as a graphical display and/or a colour display,
- a wearable display,
- a wearable augmented reality device.

The user interface (6) preferably is a local user interface. The user interface (6) is advantageously located at or adjacent the room controller (2). The user interface (6) ideally connects to the room controller (2) and is in operative communication with the room controller (2).

The instant disclosure also teaches any of the systems (1) described herein, wherein the remote controller (3) is configured to:

produce an appliance error signal based on the predicted appliance error;
transmit the appliance error signal to the room controller (2);

wherein the room controller (2) is configured to:

receive the appliance error signal;
in response to the appliance error signal, produce a stop signal;
transmit the stop signal to the at least one appliance (4a, 4b);

wherein the at least one appliance (4a, 4b) is configured to:

receive the stop signal; and
in response to the stop signal, stop and/or shut down operation.

The instant disclosure further teaches any of the systems (1) described above, wherein the room controller (2) has a user interface (6) and is configured to:

receive an input signal indicative of reference data from a user through the user interface (6);
transmit the input signal to the remote controller (3);

wherein the remote controller (3) is configured to:

receive the input signal; and
in response to the input signal, produce the reference data from the input signal and store the reference data in the memory (5) of the remote controller (3).

In an embodiment, the user interface (6) comprises at least one of:

- a touch screen such as a capacitive touch screen,
- a keyboard connected to the room controller (2),

- at least one push-button connected to the room controller (2),
- an array of push-buttons connected to the room controller (2).

The user interface (6) preferably is a local user interface. The user interface (6) is advantageously located at or adjacent the room controller (2). In an embodiment, the room controller (2) comprises a microcontroller and/or a microprocessor, the microcontroller and/or the microprocessor of the room controller (2) being in operative communication with the user interface (6) of the room controller (2).

The instant disclosure also teaches any of the systems (1) described herein, wherein the room controller (2) has a local maintenance interface (6) and is configured to:

receive an input signal indicative of reference data from maintenance personnel through the local maintenance interface (6);
transmit the input signal to the remote controller (3);

wherein the remote controller (3) is configured to:

receive the input signal; and
in response to the input signal, produce the reference data from the input signal and store the reference data in the memory (5) of the remote controller (3).

In an embodiment, the local maintenance interface (6) comprises at least one of:

- a touch screen such as a capacitive touch screen,
- a keyboard connected to the room controller (2),
- at least one push-button connected to the room controller (2),
- an array of push-buttons connected to the room controller (2).

The local maintenance interface (6) is advantageously located at or adjacent the room controller (2). The local maintenance interface (6) ideally connects to the room controller (2) and is in operative communication with the room controller (2). In an embodiment, the room controller (2) comprises a microcontroller and/or a microprocessor, the microcontroller and/or the microprocessor of the room controller (2) being in operative communication with the local maintenance interface (6) of the room controller (2).

The room controller (2) is preferably operable to transmit the input signal to the remote controller (3) using a predetermined communication bus protocol and using a digital communication bus. It is envisaged that the system (1) comprises the digital communication bus.

The instant disclosure still teaches any of the systems (1) described above, wherein the system (1) comprises at least one mobile handheld device (7), the at least one mobile handheld device (7) being located remotely from the room controller (2) and being located remotely from the remote controller (3), the remote controller (3) being in wireless, operative communication with the at least one mobile handheld device (7); wherein the remote controller (3) is configured to:

produce a push signal based on the predicted appliance error; and
transmit the push signal to the at least one mobile handheld device (7).

According to an aspect of the present disclosure, the at least one mobile handheld device (7) comprises at least one of:

- a tablet computer,
- a portable messenger device,
- a mobile phone.

The remote controller (3) is preferably operable to transmit the push signal to the at least one mobile handheld device (7) using a predetermined communication bus protocol and using a digital communication bus. It is envisaged that the system (1) comprises the digital communication bus.

It is envisaged that the at least one mobile handheld device (7) is located at least one thousand meters, preferably at least two thousand meters, more preferably at least five thousand meters, from the remote controller (3). It is still envisaged that the at least one mobile handheld device (7) is located at least one thousand meters, preferably at least two thousand meters, more preferably at least five thousand meters, from the room controller (2).

The at least one mobile handheld device (7) preferably comprises a microcontroller and/or a microprocessor and/or an electronic control unit.

The instant disclosure also teaches any of the systems (1) described above and having a mobile handheld device (7),
wherein the at least one mobile handheld device (7) comprises a screen (8) and is configured to:

receive the push signal; and
in response to the push signal, produce a push message from the push signal and employ the screen (8) to display the push message to a user.

The present disclosure also teaches any of the systems (1) described herein and involving at least one mobile handheld device (7),
wherein the at least one mobile handheld device (7) comprises a screen (8) and is configured to:

receive the push signal; and
in response to the push signal, produce a push message from the push signal and employ the screen (8) to display the push message to maintenance personnel.

It is envisaged that the screen (8) of the at least one mobile handheld device (7) comprises at least one of:

- a display such as a graphical display and/or a colour display,
- a wearable display,
- a wearable augmented reality device.

The screen (8) is advantageously located at or adjacent the at least one mobile handheld device (7). The screen (8) ideally connects to the at least one mobile handheld device (7) and is in operative communication with the at least one mobile handheld device (7). In an embodiment, the at least one mobile handheld device (7) comprises a microcontroller and/or a microprocessor, the microcontroller and/or the microprocessor of the at least one mobile handheld device (7) being in operative communication with the screen (8) of the at least one mobile handheld device (7).

The instant disclosure also teaches any of the systems (1) described above, wherein the remote controller (3) is configured to:

determine a moment value of the stored appliance data; and
store the moment value of the stored appliance data as reference data in the memory (5) of the remote controller (3).

The present disclosure also teaches any of the systems (1) described herein, wherein the remote controller (3) is configured to:

calculate a moment value of the stored appliance data; and
store the moment value of the stored appliance data as reference data in the memory (5) of the remote controller (3).

In an embodiment, the moment value of the stored appliance data is or comprises a first moment $\mu_1$ of the stored appliance data $x_i$:

$$\mu_1 = \frac{1}{N} \sum_{i=1}^{N} x_i$$

In an alternate embodiment, the moment value of the stored appliance data is or comprises a second moment $\mu_2$ of the stored appliance data $x_i$:

$$\mu_2 = \frac{1}{N} \sum_{i=1}^{N} x_i^2$$

A moment value analysis makes first, second, third, etc moment values available as stored reference data. The system (1) can thus produce reference data on the fly. The system (1) can also factor averages and deviations from averages into its predictions of appliance failures.

The instant disclosure still teaches any of the systems (1) described above and involving a moment value analysis, wherein the remote controller (3) is configured to:

determine an average value of the stored appliance data; and
store the average value as reference data in the memory (5) of the remote controller (3).

The present disclosure also teaches any of the systems (1) described herein, wherein the remote controller (3) is configured to:

calculate an average value of the stored appliance data; and
store the average value as reference data in the memory (5) of the remote controller (3).

In an embodiment, the average value of the stored appliance data is or comprises an arithmetic mean of the stored appliance data. In an alternate embodiment, the average value of the stored appliance data is or comprises a geometric mean of the stored appliance data $x_i$:

$$\sqrt[N]{x_1 \cdot x_2 \cdot \cdots \cdot x_N}$$

The instant disclosure also teaches any of the systems (1) described above, wherein the remote controller (3) is configured to:

perform a linear regression analysis of the stored appliance data;
determine a first intercept value $\alpha$ and a first slope value $\beta$ from the linear regression analysis of the stored appliance data;
determine a first extrapolated value by extrapolating the stored appliance data using the first intercept value $\alpha$ and the first slope value $\beta$; and
store the first extrapolated value as reference data in the memory (5) of the remote controller (3).

The present disclosure also teaches any of the systems (1) described herein, wherein the remote controller (3) is configured to:

perform a linear regression analysis of the stored appliance data;
calculate a first intercept value $\alpha$ and a first slope value $\beta$ from the linear regression analysis of the stored appliance data;

calculate a first extrapolated value by extrapolating the stored appliance data using the first intercept value α and the first slope value β; and

store the first extrapolated value as reference data in the memory (5) of the remote controller (3).

A linear regression analysis makes predicted and/or forecast values available as stored reference data. The system (1) can thus produce reference data on the fly. The system (1) can also factor expected and/or extrapolated values of temperature, of humidity, of pressure, of occupancy, etc into its predictions of appliance failures.

The instant disclosure further teaches any of the systems (1) described above and involving a moment value analysis and/or an average value analysis, wherein the remote controller (3) is configured to:

predict an appliance error based on the comparison between the stored appliance data and the stored reference data;

produce an appliance error signal based on the predicted appliance error; and

transmit the appliance error signal to the room controller (2).

The remote controller (3) is preferably operable to transmit the appliance error signal to the room controller (2) using a predetermined communication bus protocol and using a digital communication bus. It is envisaged that the system (1) comprises the digital communication bus.

The present disclosure also teaches any of the systems (1) described herein and involving a moment value analysis and/or a regression analysis of the stored appliance data, wherein the system (1) comprises at least one mobile handheld device (7), the at least one mobile handheld device (7) being located remotely from the room controller (2) and being located remotely from the remote controller (3), the remote controller (3) being in operative communication with the at least one mobile handheld device (7);

wherein the remote controller (3) is configured to:

produce a push signal based on the predicted appliance error; and

transmit the push signal to the at least one mobile handheld device (7);

wherein the at least one mobile handheld device (7) comprises a screen (8) and is configured to:

receive the push signal; and

in response to the push signal, produce a push message from the push signal and employ the screen (8) to display the push message to a user and/or to maintenance personnel.

The instant disclosure still teaches a room controller (2) for use in any of the systems (1) described above and involving at least one mobile handheld device (7),

wherein the room controller (2) comprises a memory (9) storing a first threshold value and is in wireless, operative communication with the at least one mobile handheld device (7), the room controller (2) being configured to:

receive a beacon signal from the at least one mobile handheld device (7);

produce a value indicative of relative signal strength from the beacon signal;

read the threshold value from the memory (9) of the room controller (2);

compare the value indicative of relative signal strength to the first threshold value; and

produce a first signal indicative of proximity based on the comparison between the value indicative of relative signal strength and the first threshold value.

The memory (9) of the room controller (2) preferably is a non-volatile memory. The memory (9) of the room controller (2) advantageously is a non-transitory memory. The memory (9) of the room controller (2) ideally connects to the room controller (2) and is in operative communication with the room controller (2). In an embodiment, the room controller (2) comprises a microcontroller and/or a microprocessor, the microcontroller and/or the microprocessor of the room controller (2) being in operative communication with the memory (9) of the room controller (2).

The room controller (2) preferably has a wireless, radio-frequency interface (10) for wireless, operative communication with the at least one mobile handheld device (7). The at least one mobile handheld device (7) advantageously has a wireless, radio-frequency interface (11) for wireless, operative communication with the room controller (2). According to an aspect of the instant disclosure, the wireless, radio-frequency interface (10) of the room controller (2) comprises an antenna. According to a related aspect of the instant disclosure, the wireless, radio-frequency interface (11) of the at least one mobile handheld device (7) comprises an antenna.

The beacon signal is ideally received via a wireless connection. The beacon signal is advantageously received using a predetermined communication bus protocol such as a digital protocol. The beacon signal is advantageously received using a digital communication bus. It is envisaged that the system (1) comprises the digital communication bus.

According to an aspect of the present disclosure, the room controller (2) is configured to produce a first signal indicative of proximity, if the value indicative of relative signal strength exceeds the first threshold value.

An analysis of relative signal strengths within the system (1) enables geo-fencing and more nuanced assessments of appliance failures. The analysis allows appliance failures to be associated with users of mobile handheld devices (7). Appliance failures can also be associated with maintenance personnel.

The instant disclosure still teaches any of the room controllers (2) described above,
wherein the memory (9) of the room controller (2) stores a second threshold value, wherein the room controller (2) is configured to:

> receive a time series of beacon signals from the at least one mobile handheld device (7);
> produce a time series of values indicative of relative signal strengths from the time series of beacon signals;
> determine a moment value of the time series of values;
> read the second threshold value from the memory (9) of the room controller (2);
> compare the moment value of the time series of values to the second threshold value; and
> produce a second signal indicative of proximity based on the comparison between the moment value of the time series of values and the second threshold value.

In an embodiment, the first threshold value equals the second threshold value. In an alternate embodiment, the first threshold value is different from the second threshold value.

The time series of beacon signals is ideally received via a wireless connection. The time series of beacon signals is advantageously received using a predetermined communication bus protocol such as a digital protocol. The time series of beacon signals is preferably received using a digital communication bus. The system (1) preferably comprises the digital communication bus. The beacon signal is advantageously received using a predetermined communication bus protocol such as a digital protocol.

It is envisaged that the room controller (2) is configured to produce a time series of values indicative of relative signal strengths by producing a value indicative of relative signal strength from every beacon signal of the time series of beacon signals. It is still envisaged that the room controller (2) is configured to produce a time series of values indicative of relative signal strengths by producing a value indicative of relative signal strength from each beacon signal of the time series of beacon signals. The time series of values indicative of relative signal strengths preferably is a time series of values of relative signal strengths.

The present disclosure also teaches any of the room controllers (2) described herein and having a memory (9) storing a second threshold value, wherein the room controller (2) is configured to:
calculate a moment value of the time series of values.

In an embodiment, the moment value of the time series of values is or comprises a first moment $v_1$ of the time series of values $y_i$:

$$v_1 = \frac{1}{N} \sum_{i=1}^{N} y_i$$

In an alternate embodiment, the moment value of the time series of values is or comprises a second moment $v_2$ of the time series of values $y_i$:

$$v_2 = \frac{1}{N} \sum_{i=1}^{N} y_i^2$$

According to an aspect of the present disclosure, the room controller (2) is configured to produce a second signal indicative of proximity, if the moment value of the time series of values exceeds the second threshold value.

An analysis of moment values of signal strengths within the system (1) affords yet safer assessments of appliance failures, since signal strengths of beacons scatter. The effect of scatter is that proximity cannot always be assessed based on a single beacon. Instead, it may be necessary to analyse a moment value such as an average of signal strengths in deciding whether a user can dependably be linked to an appliance failure.

The instant disclosure still teaches any of the room controllers (2) described above and involving a moment value analysis,
wherein the memory (9) of the room controller (2) stores a third threshold value, wherein the room controller (2) is configured to:

> determine an average value of the time series of values;
> read the third threshold value from the memory (9) of the room controller (2);
> compare the average value of the time series of values to the third threshold value; and
> produce a third signal indicative of proximity based on the comparison between the average value of the time series of values and the third threshold value.

In an embodiment, the third threshold value equals the second threshold value. In an alternate embodiment, the third threshold value is different from the second threshold value.

The instant disclosure teaches any of the room controllers (2) described herein and having a memory (9) storing a third threshold value, wherein the room controller (2) is configured to:
calculate an average value of the time series of values.

In an embodiment, the average value of the time series of values is or comprises an arithmetic mean of the time series of values. In an alternate embodiment, the average value of the time series of values is or comprises a geometric mean of the time series of values $y_i$:

$$\sqrt[N]{y_1 \cdot y_2 \cdot \cdots \cdot y_N}$$

According to an aspect of the present disclosure, the room controller (2) is configured to produce a third signal indicative of proximity, if the average value of the time series of values exceeds the third threshold value.

The instant disclosure also teaches any of the room controllers (2) described above, wherein the memory (9) of the room controller (2) stores a fourth threshold value, wherein the room controller (2) is configured to:

receive a time series of beacon signals from the at least one mobile handheld device (7);
produce a time series of values indicative of relative signal strengths from the time series of beacon signals;
perform a linear regression analysis of the time series of values;
determine a second slope value $\delta$ from the linear regression analysis of the time series of values;
read the fourth threshold value from the memory (9) of the room controller (2);
compare the second slope value $\delta$ to the fourth threshold value; and
produce a fourth signal indicative of proximity based on the comparison between the second slope value $\delta$ and the fourth threshold value.

In an embodiment, the fourth threshold value equals the third threshold value. In an alternate embodiment, the fourth threshold value is different from the third threshold value.

The instant disclosure teaches any of the room controllers (2) described herein and having a memory (9) storing a fourth threshold value, wherein the room controller (2) is configured to:
calculate a second slope value $\delta$ from the linear regression analysis of the time series of values.

According to an aspect of the present disclosure, the room controller (2) is configured to produce a fourth signal indicative of proximity, if the second slope value $\delta$ exceeds the fourth threshold value.

An analysis of relative signal strengths within the system (1) affords yet safer assessments of appliance failures, since signal strengths of beacons scatter. The effect of scatter is that proximity cannot always be assessed based on a single beacon and/or based on an average of such beacons. Instead, it may be necessary to analyse a trend in signal strengths in deciding whether a user can dependably be linked to an appliance failure. It is also envisaged to dependably link maintenance personnel to an appliance failure.

The instant disclosure still further teaches any of the room controllers (2) described above, wherein the room controller (2) comprises a visible indicator and is configured to:
in response to a proximity signal, activate the visible indicator.

It is envisaged that the visible indicator of the room controller (2) comprises at least one of:

- a display such as a graphical display and/or a colour display,
- a wearable display,
- a wearable augmented reality device,
- a light emitting diode.

The visible indicator is advantageously located at or adjacent the room controller (2). The visible indicator ideally connects to the room controller (2) and is in operative communication with the room controller (2). In an embodiment, the room controller (2) comprises a microcontroller and/or a microprocessor, the microcontroller and/or the microprocessor of the room controller (2) being in operative communication with the visible indicator of the room controller (2). It is envisaged that the visible indicator of the room controller (2) is or comprises the user interface (6) of the room controller (2). It is also envisaged that the visible indicator of the room controller (2) is or comprises the local maintenance interface (6) of the room controller (2).

It is still envisaged that a signal indicative of proximity indicates whether the at least one mobile handheld device (7) is within a predetermined distance such as ten meters or twenty meters or fifty meters from the room controller (2). It is also envisaged that a signal indicative of proximity indicates whether the room controller (2) is within a predetermined distance such as ten meters or twenty meters or fifty meters from the at least one mobile handheld device (7).

It is envisaged that a signal indicative of proximity indicates whether a user associated with the at least one mobile handheld device (7) is within a predetermined distance such as ten meters or twenty meters or fifty meters from the room controller (2). It is also envisaged that a signal indicative of proximity indicates whether the room controller (2) is within a predetermined distance such as ten meters or twenty meters or fifty meters from the user associated with the at least one mobile handheld device (7).

The instant disclosure still a tangible, machine-readable medium having a set of instructions stored thereon that when executed by one or more processors cause any of the room controllers (2) described above to:

receive a beacon signal from at least one mobile handheld device (7);
produce a value indicative of relative signal strength from the beacon signal;
read the threshold value from the memory (9) of the room controller (2);

compare the value indicative of relative signal strength to the first threshold value; and

produce a first signal indicative of proximity based on the comparison between the value indicative of relative signal strength and the first threshold value.

A tangible, machine-readable medium having a set of instructions stored thereon that when executed by one or more processors cause a room controller (2) described herein and having a memory (9) storing a second threshold value to:

receive a time series of beacon signals from at least one mobile handheld device (7), preferably from the at least one mobile handheld device (7);

produce a time series of values indicative of relative signal strengths from the time series of beacon signals;

determine and/or calculate a moment value such as an arithmetic average of the time series of values;

read the second threshold value from the memory (9) of the room controller (2);

compare the moment value of the time series of values to the second threshold value; and

produce a second signal indicative of proximity based on the comparison between the moment value of the time series of values and the second threshold value.

A tangible, machine-readable medium having a set of instructions stored thereon that when executed by one or more processors cause a room controller (2) described herein and having a memory (9) storing a third threshold value to:

receive a time series of beacon signals from at least one mobile handheld device (7), preferably from the at least one mobile handheld device (7);

produce a time series of values indicative of relative signal strengths from the time series of beacon signals;

determine and/or calculate an average value of the time series of values;

read the third threshold value from the memory (9) of the room controller (2);

compare the average value of the time series of values to the third threshold value; and

produce a third signal indicative of proximity based on the comparison between the average value of the time series of values and the third threshold value.

A tangible, machine-readable medium having a set of instructions stored thereon that when executed by one or more processors cause a room controller (2) described herein and having a memory (9) storing a fourth threshold value to:

receive a time series of beacon signals from at least one mobile handheld device (7), preferably from the at least one mobile handheld device (7);

produce a time series of values indicative of relative signal strengths from the time series of beacon signals;

perform a linear regression analysis of the time series of values;

determine and/or calculate a second slope value $\delta$ from the linear regression analysis of the time series of values;

read the fourth threshold value from the memory (9) of the room controller (2);

compare the second slope value $\delta$ to the fourth threshold value; and

produce a fourth signal indicative of proximity based on the comparison between the second slope value $\delta$ and the fourth threshold value.

A tangible, machine-readable medium having a set of instructions stored thereon that when executed by one or more processors cause a room controller (2) described herein and having a visible indicator to:
in response to a proximity signal, activate the visible indicator.

Any steps of a method according to the present disclosure can be embodied in hardware, in a software module executed by a processor, in a software module being executed using operating-system-level virtualization, in a cloud computing arrangement, or in a combination thereof. The software can include a firmware, a hardware driver run in the operating system, or an application program. Thus, the disclosure also relates to a computer program product for performing the operations presented herein. If implemented in software, the functions described can be stored as one or more instructions on a computer-readable medium. Some examples of storage media that can be used include random access memory (RAM), read only memory (ROM), flash memory, EPROM memory, EEPROM memory, registers, a hard disk, a solid state disk, a removable disk, other optical disks, or any available media that can be accessed by a computer or any other IT equipment and appliance.

It should be understood that the foregoing relates only to certain embodiments of the disclosure and that numerous changes can be made therein without departing from the scope of the disclosure as defined by the following claims. It should also be understood that the disclosure is not restricted to the illustrated embodiments and that various modifications can be made within the scope of the following claims.

Reference numerals

1 system
2 room controller
3 remote controller

4a, 4b appliance
5 memory
6 interface
7 mobile handheld device
8 screen
9 memory
10 radio-frequency interface
11 radio-frequency interface

**Claims**

1. A system (1) comprising:
a room controller (2), a remote controller (3) having a memory (5) storing reference data, at least one appliance (4a, 4b), the room controller (2) being in operative communication with the at least one appliance (4a, 4b) and with the remote controller (3), the remote controller (3) being located remotely from the room controller (2);
wherein the room controller (2) is configured to:

   produce a request for appliance data;
   transmit the request to the at least one appliance (4a, 4b);

wherein the at least one appliance (4a, 4b) is configured to:

   receive the request;
   in response to the request, produce the appliance data and transmit the appliance data to the room controller (2);

wherein the room controller (2) is configured to:

   receive the appliance data from the at least one appliance (4a, 4b);
   transmit the appliance data to the remote controller (3);

**characterised in that** the remote controller (3) is configured to:

   receive the appliance data from the room controller (2);
   store the appliance data over time in the memory (5) of the remote controller (3); calculate a moment value of the stored appliance data;
   store the moment value of the stored appliance data as reference data in the memory (5) of the remote controller (3);
   read the reference data from the memory (5) of the remote controller (3);
   compare the stored appliance data to the reference data; and
   predict an appliance error based on the comparison between the stored appliance data and the reference data.

2. The system (1) according to claim 1, wherein the remote controller (3) is configured to:

   compare the stored appliance data to the reference data and/or to model data produced from a reference model; and
   predict a maintenance request for the at least one appliance (4a, 4b) based on the comparison between the stored appliance data and the reference data and/or the model data.

3. The system (1) according to any of the claims 1 to 2, wherein the remote controller (3) is configured to:

   compare the stored appliance data to the reference data and/or to model data produced from a reference model; and
   produce an energy savings signal based on the comparison between the stored appliance data and the reference data and/or the model data. transmit the energy savings signal to the room controller (2);

wherein the room controller (2) has a user interface (6) and is configured to:

   receive the energy savings signal;
   in response to the energy savings signal, produce an energy savings message indicating suggested energy savings from the energy savings signal; and
   employ the user interface (6) to display the energy savings message.

4. The system (1) according to any of the claims 1 to 3,

   wherein the system (1) comprises at least one mobile handheld device (7), the at least one mobile handheld device (7) being located remotely from the room controller (2) and being located remotely from the remote controller (3), the remote controller (3) being in wireless, operative communication with the at least one mobile handheld device (7); wherein the remote controller (3) is configured to:
   produce a push signal based on the predicted appliance error; and
   transmit the push signal to the at least one mobile handheld device (7).

5. The system (1) according to claim 4, wherein the at least one mobile handheld device (7) comprises a screen (8) and is configured to:

   receive the push signal; and
   in response to the push signal, produce a push message from the push signal and employ the screen (8) to display the push message to a user.

6. The system (1) according to any of the claims 1 to 5, wherein the remote controller (3) is configured to:

    determine an average value of the stored appliance data; and
    store the average value as reference data in the memory (5) of the remote controller (3).

7. The system (1) according to any of the claims 1 to 6, wherein the remote controller (3) is configured to:

    perform a linear regression analysis of the stored appliance data;
    determine a first intercept value $\alpha$ and a first slope value $\beta$ from the linear regression analysis of the stored appliance data;
    determine a first extrapolated value by extrapolating the stored appliance data using the first intercept value $\alpha$ and the first slope value $\beta$; and
    store the first extrapolated value as reference data in the memory (5) of the remote controller (3).

8. The system (1) according to any of the claims 1 to 7, wherein the remote controller (3) is configured to:

    predict an appliance error based on the comparison between the stored appliance data and the stored reference data;
    produce an appliance error signal based on the predicted appliance error; and
    transmit the appliance error signal to the room controller (2).

**Patentansprüche**

1. System (1), das Folgendes umfasst:
einen Raumregler (2), eine entfernt angeordnete Recheneinheit (3), die einen Speicher (5) aufweist, in dem Referenzdaten gespeichert sind, mindestens ein Gerät (4a, 4b), wobei der Raumregler (2) in betriebsmäßiger Kommunikation mit dem mindestens einen Gerät (4a, 4b) und mit der entfernt angeordneten Recheneinheit (3) steht, wobei die entfernt angeordnete Recheneinheit (3) sich örtlich entfernt von dem Raumregler (2) befindet,
wobei der Raumregler (2) ausgebildet ist, um:

    eine Anforderung für Gerätedaten zu erzeugen,
    die Anforderung an das mindestens eine Gerät (4a, 4b) zu senden,

wobei das mindestens eine Gerät (4a, 4b) ausgebildet ist, um:

    die Anforderung zu empfangen,
    in Reaktion auf die Anforderung die Gerätedaten zu erzeugen und die Gerätedaten an den Raumregler (2) zu senden,

wobei der Raumregler (2) ausgebildet ist, um:

    die Gerätedaten von dem mindestens einen Gerät (4a, 4b) zu empfangen,
    die Gerätedaten an die entfernt angeordnete Recheneinheit (3) zu senden,

**dadurch gekennzeichnet, dass**
die entfernt angeordnete Recheneinheit (3) ausgebildet ist, um:

    die Gerätedaten von dem Raumregler (2) zu empfangen,
    die Gerätedaten über die Zeit in dem Speicher (5) der entfernt angeordneten Recheneinheit (3) zu speichern,
    einen Momentwert der gespeicherten Gerätedaten zu berechnen,
    den Momentwert der gespeicherten Gerätedaten als Referenzdaten in dem Speicher (5) der entfernt angeordneten Recheneinheit (3) zu speichern,
    die Referenzdaten aus dem Speicher (5) der entfernt angeordneten Recheneinheit (3) zu lesen,
    die gespeicherten Gerätedaten mit den Referenzdaten zu vergleichen und
    auf der Grundlage des Vergleichs zwischen den gespeicherten Gerätedaten und den Referenzdaten einen Gerätefehler vorherzusagen.

2. Das System (1) nach Anspruch 1,
wobei die entfernt angeordnete Recheneinheit (3) ausgebildet ist, um:

    die gespeicherten Gerätedaten mit den Referenzdaten und/oder aus einem Bezugsmodell erzeugten Modelldaten zu vergleichen und
    auf der Grundlage des Vergleichs zwischen den gespeicherten Gerätedaten und den Referenzdaten und/oder den Modelldaten eine Wartungsanforderung für das mindestens eine Gerät (4a, 4b) vorherzusagen.

3. Das System (1) nach einem der Ansprüche 1 bis 2, wobei die entfernt angeordnete Recheneinheit (3) dazu ausgebildet ist:

    die gespeicherten Gerätedaten mit den Referenzdaten und/oder aus einem Bezugsmodell erzeugten Modelldaten zu vergleichen und
    auf der Grundlage des Vergleichs zwischen den gespeicherten Gerätedaten und den Referenzdaten und/oder den Modelldaten ein Energieeinsparsignal zu erzeugen,
das Energieeinsparsignal an den Raumregler (2) zu senden, wobei der Raumregler (2) eine Benutzerschnittstelle (6) aufweist und ausgebildet ist, um:

das Energieeinsparsignal zu empfangen,
in Reaktion auf das Energieeinsparsignal aus dem Energieeinsparsignal eine Energieeinsparnachricht zu erzeugen, die die vorgeschlagenen Energieeinsparungen angibt, und
die Benutzerschnittstelle (6) zu nutzen, um die Energieeinsparnachricht anzuzeigen.

4. Das System (1) nach einem der Ansprüche 1 bis 3,

wobei das System (1) mindestens eine mobile, handgehaltene Einrichtung (7) umfasst, wobei die mindestens eine mobile, handgehaltene Einrichtung (7) sich örtlich entfernt von dem Raumregler (2) befindet und sich örtlich entfernt von der entfernt angeordneten Recheneinheit (3) befindet, wobei die entfernt angeordnete Recheneinheit (3) in drahtloser, betriebsmäßiger Kommunikation mit der mindestens einen mobilen, handgehaltenen Einrichtung (7) steht, wobei die entfernt angeordnete Recheneinheit (3) ausgebildet ist, um:

auf der Grundlage des vorhergesagten Gerätefehlers ein Push-Signal zu erzeugen und
das Push-Signal an die mindestens eine mobile, handgehaltene Einrichtung (7) zu senden.

5. Das System (1) nach Anspruch 4,
wobei die mindestens eine mobile, handgehaltene Einrichtung (7) einen Bildschirm (8) umfasst und ausgebildet ist, um:

das Push-Signal zu empfangen und
in Reaktion auf das Push-Signal aus dem Push-Signal eine Push-Nachricht zu erzeugen und den Bildschirm (8) zu nutzen, um die Push-Nachricht einem Benutzer anzuzeigen.

6. Das System (1) nach einem der Ansprüche 1 bis 5, wobei die entfernt angeordnete Recheneinheit (3) ausgebildet ist, um:

einen Mittelwert der gespeicherten Gerätedaten zu bestimmen und
den Mittelwert als Referenzdaten in dem Speicher (5) der entfernt angeordnete Recheneinheit (3) zu speichern.

7. Das System (1) nach einem der Ansprüche 1 bis 6, wobei die entfernt angeordnete Recheneinheit (3) ausgebildet ist, um:

eine lineare Regressionsanalyse der gespeicherten Gerätedaten durchzuführen,
aus der linearen Regressionsanalyse der gespeicherten Gerätedaten einen ersten Abschnittswert $\alpha$ und einen ersten Steigungswert $\beta$ zu bestimmen,
durch Extrapolieren der gespeicherten Gerätedaten unter Verwendung des ersten Abschnittswerts $\alpha$ und des ersten Steigungswerts $\beta$ einen ersten extrapolierten Wert zu bestimmen und den ersten extrapolierten Wert als Referenzdaten in dem Speicher (5) der entfernt angeordnete Recheneinheit (3) zu speichern.

8. Das System (1) nach einem der Ansprüche 1 bis 7, wobei die entfernt angeordnete Recheneinheit (3) ausgebildet ist, um:

auf der Grundlage des Vergleichs zwischen den gespeicherten Gerätedaten und den gespeicherten Referenzdaten einen Gerätefehler vorherzusagen,
auf der Grundlage des vorhergesagten Gerätefehlers ein Gerätefehlersignal zu erzeugen und das Gerätefehlersignal an den Raumregler (2) zu senden.

**Revendications**

1. Système (1) comprenant :

un dispositif de commande de pièce (2), un dispositif de commande à distance (3) ayant une mémoire (5) stockant des données de référence, au moins un appareil (4a, 4b), le dispositif de commande de pièce (2) étant en communication fonctionnelle avec l'au moins un appareil (4a, 4b) et avec le dispositif de commande à distance (3), le dispositif de commande à distance (3) étant situé à distance du dispositif de commande de pièce (2) ;
dans lequel le dispositif de commande de pièce (2) est configuré pour :

produire une demande de données d'appareil ;
transmettre la demande à l'au moins un appareil (4a, 4b) ;

dans lequel l'au moins un appareil (4a, 4b) est configuré pour :

recevoir la demande ;

en réponse à la demande, produire les données d'appareil et transmettre les données d'appareil au dispositif de commande de pièce (2) ;

dans lequel le dispositif de commande de pièce (2) est configuré pour :

recevoir les données d'appareil à partir de l'au moins un appareil (4a, 4b) ;
transmettre les données d'appareil au dispositif de commande à distance (3) ;

**caractérisé en ce que**
le dispositif de commande à distance (3) est configuré pour :

recevoir les données d'appareil à partir du dispositif de commande de pièce (2) ;
stocker les données d'appareil au fil du temps dans la mémoire (5) du dispositif de commande à distance (3) ;
calculer une valeur de moment des données d'appareil stockées ;
stocker la valeur de moment des données d'appareil stockées en tant que données de référence dans la mémoire (5) du dispositif de commande à distance (3) ;
lire les données de référence à partir de la mémoire (5) du dispositif de commande à distance (3) ;
comparer les données d'appareil stockées aux données de référence ; et
prédire une erreur d'appareil sur la base de la comparaison entre les données d'appareil stockées et les données de référence.

2. Le système (1) selonLe Le système (1) selon la revendication 1,
dans lequel le dispositif de commande à distance (3) est configuré pour :

comparer les données d'appareil stockées aux données de référence et/ou à des données de modèle produites à partir d'un modèle de référence ; et
prédire une demande de maintenance de l'au moins un appareil (4a, 4b) sur la base de la comparaison entre les données d'appareil stockées et les données de référence et/ou les données de modèle.

3. Le système (1) selon l'une des revendications 1 et 2,

dans lequel le dispositif de commande à distance (3) est configuré pour :

comparer les données d'appareil stockées aux données de référence et/ou à des données de modèle produites à partir d'un modèle de référence ; et
produire un signal d'économie d'énergie sur la base de la comparaison entre les données d'appareil stockées et les données de référence et/ou les données de modèle ;
transmettre le signal d'économie d'énergie au dispositif de commande de pièce (2) ;

dans lequel le dispositif de commande de pièce (2) a une interface utilisateur (6) et est configuré pour :

recevoir le signal d'économie d'énergie ;
en réponse au signal d'économie d'énergie, produire un message d'économie d'énergie indiquant des économies d'énergie suggérées à partir du signal d'économie d'énergie ; et
utiliser l'interface utilisateur (6) pour afficher le message d'économie d'énergie.

4. Le système (1) selon l'une des revendications 1 à 3, dans lequel le système (1) comprend au moins un dispositif portatif mobile (7), l'au moins un dispositif portatif mobile (7) étant situé à distance du dispositif de commande de pièce (2) et étant situé à distance du dispositif de commande à distance (3), le dispositif de commande à distance (3) étant en communication fonctionnelle sans fil avec l'au moins un dispositif portatif mobile (7) ;
dans lequel le dispositif de commande à distance (3) est configuré pour :

produire un signal de poussée sur la base de l'erreur d'appareil prédite ; et
transmettre le signal de poussée à l'au moins un dispositif portatif mobile (7).

5. Le système (1) selon la revendication 4, dans lequel l'au moins un dispositif portatif mobile (7) comprend un écran (8) et est configuré pour :

recevoir le signal de poussée ; et
en réponse au signal de poussée, produire un message de poussée à partir du signal de poussée et utiliser l'écran (8) pour afficher le message de poussée à un utilisateur.

6. Le système (1) selon l'une des revendications 1 à 5, dans lequel le dispositif de commande à distance (3) est configuré pour :

déterminer une valeur moyenne des données d'appareil stockées ; et
stocker la valeur moyenne en tant que données de référence dans la mémoire (5) du dispositif de commande à distance (3).

7. Le système (1) selon l'une des revendications 1 à 6, dans lequel le dispositif de commande à distance (3) est configuré pour :

> effectuer une analyse de régression linéaire des données d'appareil stockées ;
> déterminer une première valeur d'interception $\alpha$ et une première valeur de pente $\beta$ à partir de l'analyse de régression linéaire des données d'appareil stockées ;
> déterminer une première valeur extrapolée par extrapolation des données d'appareil stockées en utilisant la première valeur d'interception $\alpha$ et la première valeur de pente $\beta$ ; et
> stocker la première valeur extrapolée en tant que données de référence dans la mémoire (5) du dispositif de commande à distance (3).

8. Le système (1) selon l'une des revendications 1 à 7, dans lequel le dispositif de commande à distance (3) est configuré pour :

> prédire une erreur d'appareil sur la base de la comparaison entre les données d'appareil stockées et les données de référence stockées ;
> produire un signal d'erreur d'appareil sur la base de l'erreur d'appareil prédite ; et
> transmettre le signal d'erreur d'appareil au dispositif de commande de pièce (2).

FIG 1

FIG 2

FIG 3

EP 3 901 711 B1

FIG 4

FIG 5

EP 3 901 711 B1

FIG 6

**EP 3 901 711 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005125102 A1
- EP 2792958 A1
- WO 2019204779 A1
- US 2017366414 A1
- US 2019195525 A1
- US 2017292725 A1
- US 2014266755 A1
- US 2019271978 A1